# FASCICULE DE BREVET EUROPEEN

(11) **EP 2 505 855 B1**
(45) Date de publication et mention de la délivrance du brevet: **04.11.2015**
(21) Numéro de dépôt: 12305039.5
(22) Date de dépôt: 11.01.2012
(51) Int. Cl.: F16B 19/10, F16B 23/00

(54) **Fixation aveugle équipée d'un système de maintien auto-cassant**
Blindbefestigung, die mit einem selbstbrechenden Haltesystem ausgestattet ist
Blind fastener provided with a self-breaking support system

(30) Priorité: 13.01.2011 FR 1150276
(43) Date de publication de la demande: 03.10.2012
(73) Titulaire: Airbus Opérations SAS, 31060 Toulouse (FR)
(72) Inventeur: Tuery, Jean-Baptiste, 31200 Toulouse (FR); Chirol, Clément, 31290 Trébons-sur-la-Grasse (FR)
(74) Mandataire: Fantin, Laurent

(56) Documents cités:
- GB-A- 2 344 864
- US-A1- 2009 053 006

## Description

La présente invention se rapporte à une fixation aveugle équipée d'un système de maintien auto-cassant.

Un fixation aveugle selon la première partie de la revendication 1 est connue du document GB 2 344 864 A.

Un outil selon la première partie de la revendication 8 est connue du document US 2009/053006 A1.

Une fixation aveugle permet d'assembler des pièces en ayant accès que d'un seul côté de l'assemblage.

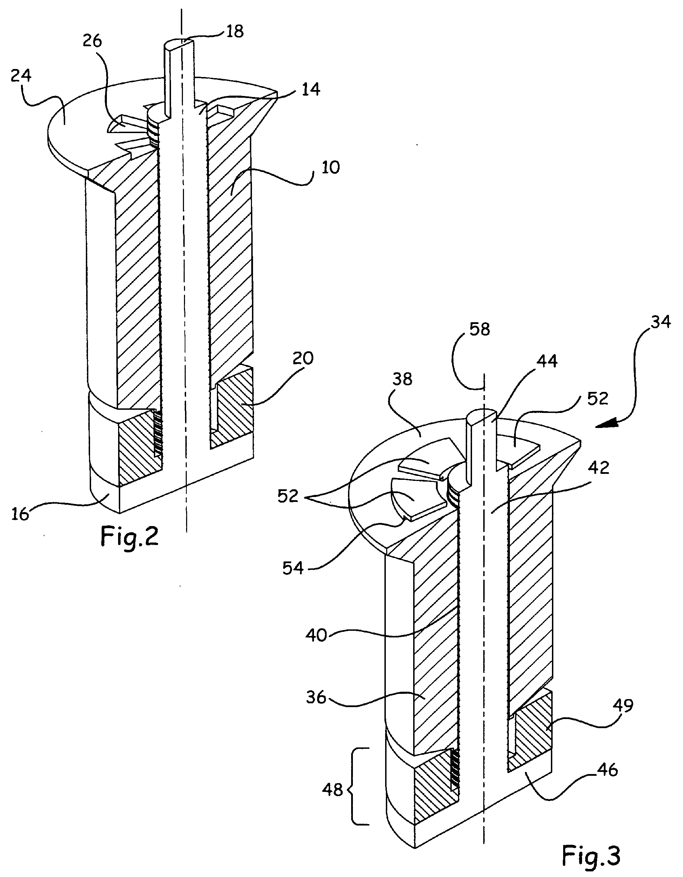

Comme illustré sur la figure 2, une fixation aveugle comprend un corps 10 comprenant un alésage 12 dans lequel se loge une tige 14 avec à une première extrémité une tête 16 et dont l'autre extrémité 18 vient en saillie par rapport au corps 10 de manière à pouvoir être saisie par un outil. Un manchon 20 appelé également bulbe est disposé entre la tête 16 et le corps 10.

Pour assurer le mouvement de translation de la tige 14, une solution consiste à prévoir une tige 14 filetée qui se visse dans un alésage 12 taraudé du corps 10. L'extrémité 18 de la tige 14 comprend au moins un méplat pour permettre à un outil 22 d'entraîner la tige 14 en rotation.

Comme illustré sur la figure 2, la face 24 du corps orientée vers l'outil 22 comprend des encoches 26 (forme en creux) permettant d'immobiliser en rotation le corps 10 afin que la rotation de la tige 14 engendre un mouvement de translation relatif entre la tige 14 et le corps 16.

Selon un mode de réalisation, un écrou 28 peut être intercalé entre l'outil 22 et la face 24 du corps.

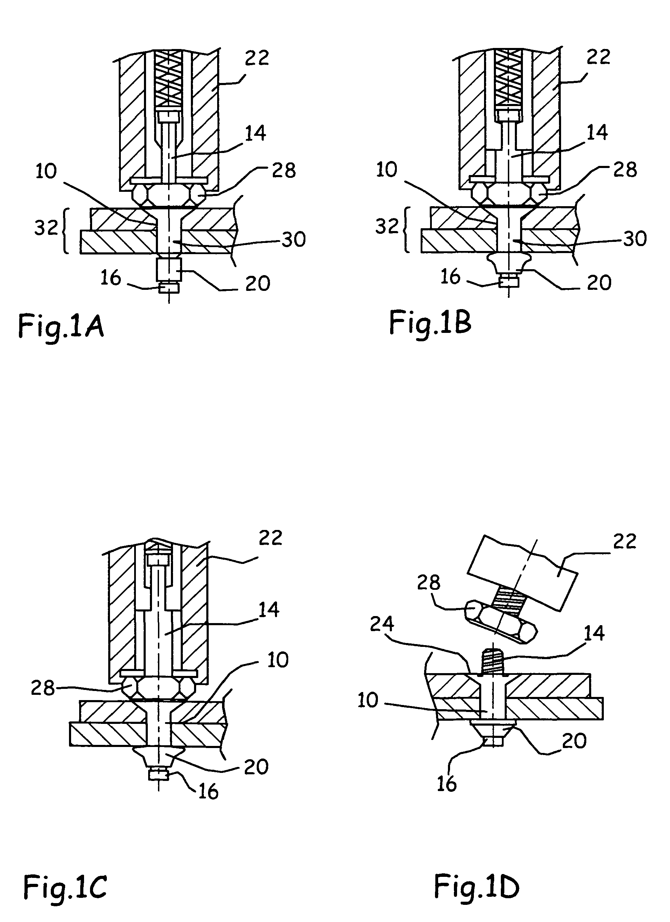

Selon un mode opératoire, dans un premier temps, la fixation aveugle est mise dans un alésage 30 réalisé dans les pièces à assembler 32, comme illustré sur la figure 1A. Lorsque l'outil 22 entraine en rotation la tige 14 cela tend à déformer progressivement le manchon 20, comme illustré sur les figures 1B et 1C, qui après fluage vient se plaquer contre la face inaccessible de l'assemblage. Lorsque le manchon 20 est totalement déformé, l'effort dans la tige filetée 14 devient trop important si bien que celle-ci se casse comme illustré sur la figure 1D.

Par la suite, il convient d'araser la tige filetée afin que cette dernière affleure la face 24 du corps.

Après la mise en place de la fixation aveugle et l'application de la peinture, les encoches 26 restent visibles. Par conséquent, ce type de fixation ne donne pas pleinement satisfaction sur le plan de l'esthétique.

Selon un autre point, lorsque ces encoches 26 sont disposées au niveau de la surface du fuselage, elles forment des aspérités qui engendrent des perturbations sur le plan aérodynamique.

La présente invention vise à pallier ces inconvénients.

A cet effet, l'objet de la présente invention concerne une fixation aveugle comprenant un corps avec à une première extrémité une face apparente, traversé par un alésage recevant une tige dont une première extrémité vient en saillie par rapport à la face apparente et dont l'autre extrémité comprend une tête apte à déformer une zone de déformation lorsque la tige se translate, la face apparente comprenant des moyens de maintien pour accoupler le corps à un outil utilisé pour entrainer en rotation la tige, lesdits moyens de maintien comprenant au moins un ergot rapporté au niveau de la face apparente et venant en saillie par rapport à cette dernière, **caractérisée en ce que** ledit au moins un ergot est relié au corps par une zone de jonction apte à se rompre lorsque l'ergot subit un effort supérieur à un seuil donné. Cette solution permet après la mise en place de la fixation d'obtenir une surface apparente sans aspérités en creux. Avantageusement, chaque ergot comprend au niveau de la zone de jonction au moins une entaille qui permet d'obtenir une section réduite et de localiser la rupture de l'ergot. Selon un mode de réalisation, pour chaque ergot, l'entaille est réalisée à la base de l'ergot.

En complément, l'invention propose un outil pour mettre en place une fixation aveugle selon l'invention, selon la revendication 8.

Avantageusement, l'outil a deux sens de rotation, un premier sens pour provoquer la déformation de la fixation aveugle et la rupture de la tige et un sens contraire au premier pour provoquer la rupture du ou des ergot(s).

Selon un mode de réalisation, l'outil comprend au niveau de chaque encoche une forme en coin qui peut pénétrer dans une entaille d'un ergot correspondant.

En variante, chaque encoche comprend une face prenant appui à distance du fond d'une entaille ménagée au niveau de l'ergot correspondant de manière à créer un moment qui facilite la rupture du ou des ergot(s).

D'autres caractéristiques et avantages ressortiront de la description qui va suivre de l'invention, description donnée à titre d'exemple uniquement, en regard des dessins annexés sur lesquels :
- Les figures 1A à 1D sont des vues illustrant la mise en place d'une fixation selon l'art antérieur,
- La figure 2 est une vue en perspective d'une fixation aveugle selon l'art antérieur,
- La figure 3 est une coupe en perspective d'une fixation aveugle selon l'invention,
- La figure 4 est une vue en perspective de la partie supérieure d'une fixation aveugle selon l'invention lors de sa déformation, la partie de l'outil étant illustrée en transparence,
- La figure 5 est une vue en perspective de la partie supérieure d'une fixation aveugle selon l'invention après la rupture de la tige,
- La figure 6 est une vue en perspective de la partie supérieure d'une fixation aveugle selon l'invention lors de la rupture des moyens de maintien, la partie de l'outil étant illustrée en transparence,
- La figure 7 est une vue en perspective de la partie supérieure d'une fixation aveugle selon l'invention à la fin du procédé de mise en place,
- Les figures 8A à 8E sont des coupes illustrant différentes variantes d'ergots,
- Les figures 9A et 9B sont des coupes illustrant l'action d'un outil sur une fixation aveugle selon l'invention respectivement lors des deux phases de la mise en place pour une première forme d'ergots, et
- Les figures 10A et 10B sont des coupes frustrent l'action d'un outil sur une fixation aveugle selon l'invention respectivement lors des deux phases de la mise en place pour une deuxième forme d'ergots.

Comme illustré sur la figure 3, une fixation aveugle 34 comprend un corps 36 de forme cylindrique avec à une première extrémité une forme évasée et une face appelée par la suite face apparente 38. Ce corps 36 comprend un alésage 40 recevant une tige 42 dont une première extrémité 44 vient en saillie par rapport à la face apparente 38 et dont l'autre extrémité comprend une tête 46.

La fixation aveugle comprend une zone de déformation 48 apte à se déformer en raison des efforts de compression exercés par la tête 46 lorsque la tige 42 se translate vers le haut.

Selon une variante, la zone de déformation 48 est un manchon 49 intercalé entre la tête 46 et le corps 36.

Selon une autre variante, la zone de déformation 48 est prévue à l'extrémité du corps 36 orientée vers la tête.

Selon une variante, pour assurer le mouvement de translation relatif entre la tige 42 et le corps 36, la tige 42 est filetée et se visse dans l'alésage 40 qui est taraudé. En parallèle, un outil peut imprimer un mouvement de rotation à la tige filetée 42. Pour ce faire, l'extrémité 44 de la tige filetée comprend un méplat pour permettre d'accoupler la tige filetée 42 à un outil rotatif.

Selon une autre variante, un outil peut tirer sur l'extrémité 44 de la tige filetée pour que cette dernière se translate.

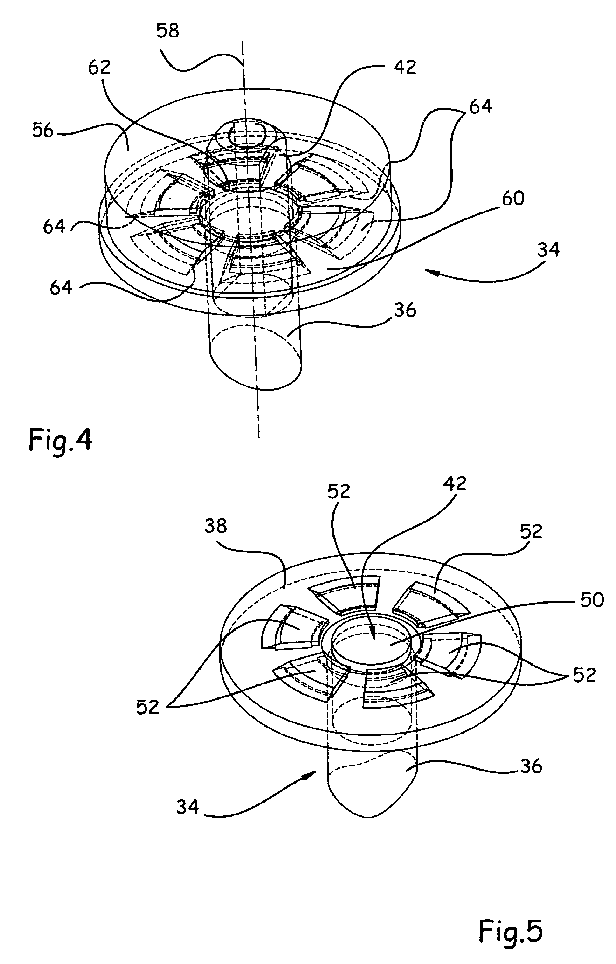

La tige 42 comprend une amorce de rupture permettant de la sectionner dans un plan affleurant la face apparente 38 lorsque la zone de déformation est déformée de manière adéquate. Selon un mode de réalisation, la tige 42 comprend une entaille au niveau du plan de rupture 50 visible sur la figure 5. Selon les différentes variantes, la face apparente 38 comprend des moyens de maintien pour accoupler le corps 36 à un outil, prévus soit pour immobiliser en rotation la fixation aveugle, notamment lorsque la tige filetée 42 est mise en rotation pour déformer la zone de déformation 48, soit pour soumettre un couple à la fixation aveugle, notamment après la cassure de la tige 42 pour vérifier la bonne mise en tension de la fixation.

Selon l'invention, les moyens de maintien comprennent au moins un ergot 52 rapporté au niveau de la face apparente 38 et venant en saillie par rapport à cette dernière. L'ergot 52 est relié au corps 36 par une zone de jonction 54 apte à se rompre lorsque l'ergot subit un effort supérieur à un seuil donné appelé seuil de rupture d'ergot, inférieur à la résistance mécanique de la fixation aveugle pour ne pas l'endommager.

En complément, comme illustré sur la figure 4, un outil 56 (dont seulement une partie est illustrée) est prévu pour la mise en rotation de la tige 42 selon son axe longitudinal 58 et comprend une face frontale 60, apte à prendre appui contre la face apparente 38 avec un orifice 62 pour permettre le passage de la tige 42, et au moins une encoche 64 pour loger l'ergot 52.

Avantageusement, la fixation aveugle comprend plusieurs ergots 52 pour répartir les efforts et assurer le maintien du corps lors de la déformation de la zone 48 et de la section de la tige 42.

En complément, l'outil 56 comprend un nombre d'encoches 64 au moins égal à celui des ergots 52, les encoches 64 étant agencées au niveau de la face frontale 60 de manière adéquate pour loger les ergots 52.

Pour chaque ergot, la jonction 54 entre l'ergot 52 et le corps 36 est dimensionnée de manière à rompre lorsque l'effort exercé par l'outil atteint le seuil de rupture d'ergot.

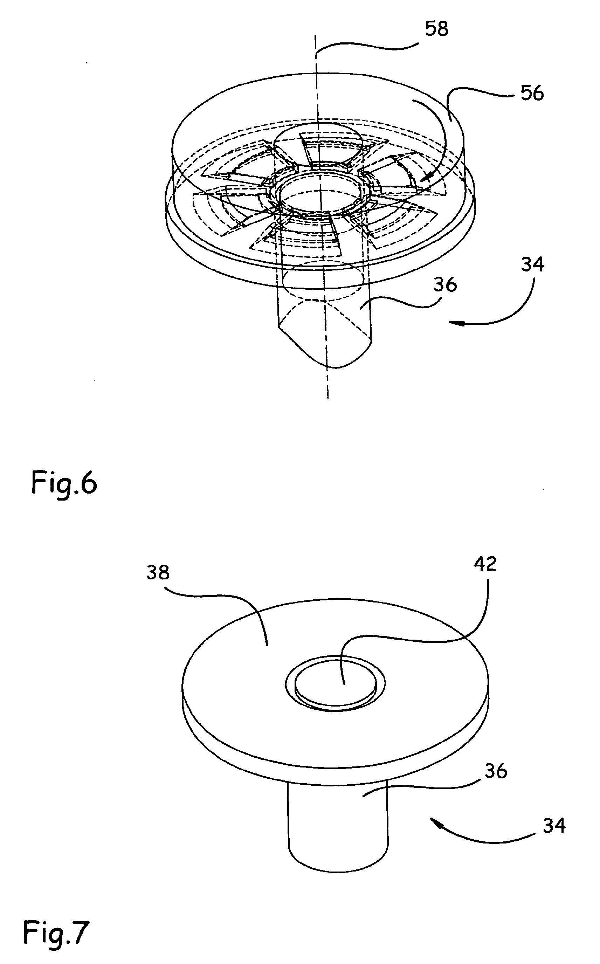

Ainsi, comme illustré sur la figure 6, lorsque l'outil 56 pivote autour de l'axe longitudinal 58 et qu'il exerce un effort atteignant le seuil de rupture d'ergot, il provoque la rupture des ergots 52 qui se sectionnent au niveau de la zone de jonction 54.

Avantageusement, les ergots 52 se sectionnent au niveau du plan de la face apparente 38. Ainsi, après sa mise en place, la fixation aveugle n'a pas besoin d'être arasée et présente une surface plane comme illustré sur la figure 7.

A cet effet, chaque ergot 52 comprend au niveau de la zone de jonction 54 au moins une entaille 66 qui permet d'obtenir une section réduite et de localiser la rupture de l'ergot au niveau du plan de la surface apparente 38.

Pour chaque ergot, l'entaille 66 est réalisée à la base de l'ergot, du côté où est appliqué l'effort de l'outil pour sectionner l'ergot.

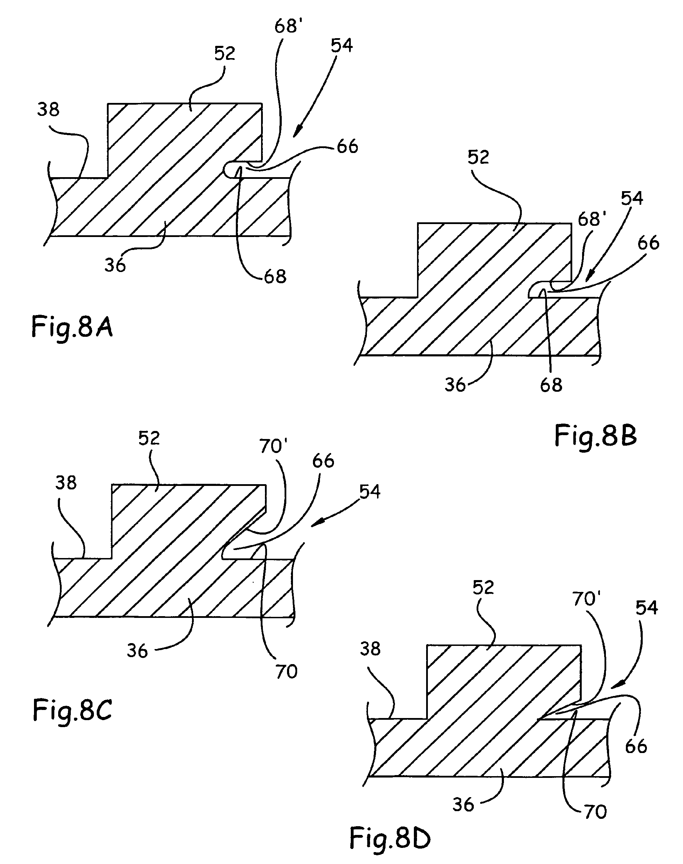

L'entaille 66 peut avoir différentes formes comme illustré sur les figures 8A à 8D.

Selon un mode de réalisation, pour au moins un ergot, l'entaille 66 est délimitée par deux faces parallèles 68, 68', l'une des deux faces 68 étant disposée dans le plan de la face apparente 38, comme illustré sur les figures 8A et 8B. Selon une variante illustrée sur la figure 8A, le fond de l'entaille 66 a une forme arrondie. Selon une autre variante illustrée sur la figure 8B, le fond de l'entaille 66 a une forme en quart de rond.

Selon un mode réalisation illustré sur les figures 8C et 8b, pour au moins un ergot, l'entaille 66 a une section triangulaire avec une face 70 disposée dans le plan de la face apparente 38 et une autre face 70' faisant un angle inférieur ou égal à 60°. Selon une variante illustrée sur la figure 8C, la face 70' fait un angle de l'ordre de 45° avec la face 70. Selon une autre variante illustrée sur la figure 8D, la face 70' fait un angle de l'ordre de 30° avec la face 70. L'intersection entre les deux faces 70, 70' peut être arrondie comme illustré sur la figure 8C ou non comme illustré sur la figure 8D.

Selon un premier mode opératoire, le mouvement de rotation relatif entre la face apparente 38 du corps et la face frontale 60 de l'outil 56 nécessaire pour rompre les ergots 52 a le même sens que celui nécessaire pour provoquer la déformation de la fixation aveugle et la rupture de la tige filetée 42.

Dans ce cas, le seuil de rupture d'ergot est supérieur à l'effort nécessaire pour sectionner la tige 42 qui est lui-même supérieur à celui nécessaire pour déformer complètement la zone de déformation 48.

Selon un autre mode opératoire, l'outil a deux sens de rotation. Ainsi, le mouvement de rotation relatif entre la face apparente 38 du corps et la face frontale 60 de l'outil 56 nécessaire pour rompre les ergots 52 a un sens contraire que celui nécessaire pour provoquer la déformation de la fixation aveugle et la rupture de la tige 42.

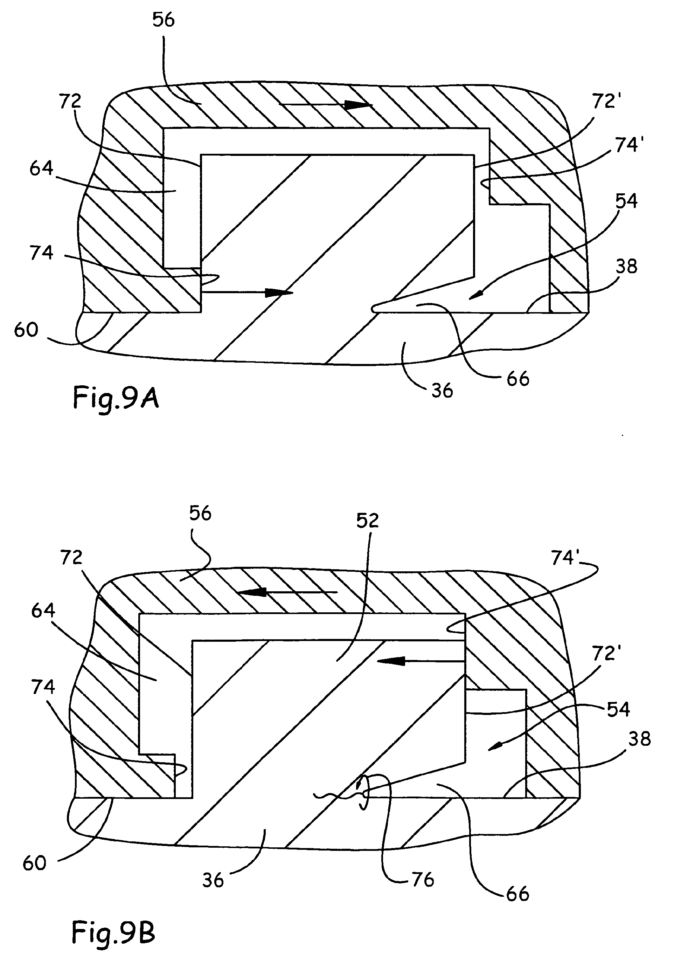

Chaque ergot 52 présente deux faces 72, 72' disposées dans deux plans sensiblement radiaux, l'une d'elle 72' présentant une entaille 66 à sa base. En parallèle, chaque encoche 64 de l'outil 56 comprend deux faces 74, 74' disposées dans deux plans sensiblement radiaux, une première face 74 étant susceptible de prendre appui contre la face 72 de l'ergot pour immobiliser en rotation le corps 36 lors de la mise en rotation de la tige 42, comme illustré sur la figure 9A, l'autre face 74' étant susceptible de prendre appui contre la face 72' de l'ergot pour le casser, comme illustré sur la figure 9B.

Cette inversion de sens permet d'obtenir une opération plus claire pour l'opérateur qui peut distinguer les deux phases de la mise en place à savoir la phase de déformation de la zone de déformation jusqu'à la rupture de la tige 42 puis la phase de rupture des ergots. Cette inversion de sens permet également de vérifier la bonne tenue mécanique de la zone de déformation et que la fixation aveugle est bien précontrainte.

Avantageusement, dans le premier sens de rotation, l'outil est en contact avec la base de chaque ergot, comme illustré sur la figure 9A. Cela permet de ne pas créer de fortes contraintes. Dans le sens contraire, l'effort est appliqué à distance du fond de l'entaille 66, ce qui tend à créer un moment 76 qui facilite la rupture de l'ergot comme illustré sur la figure 9B.

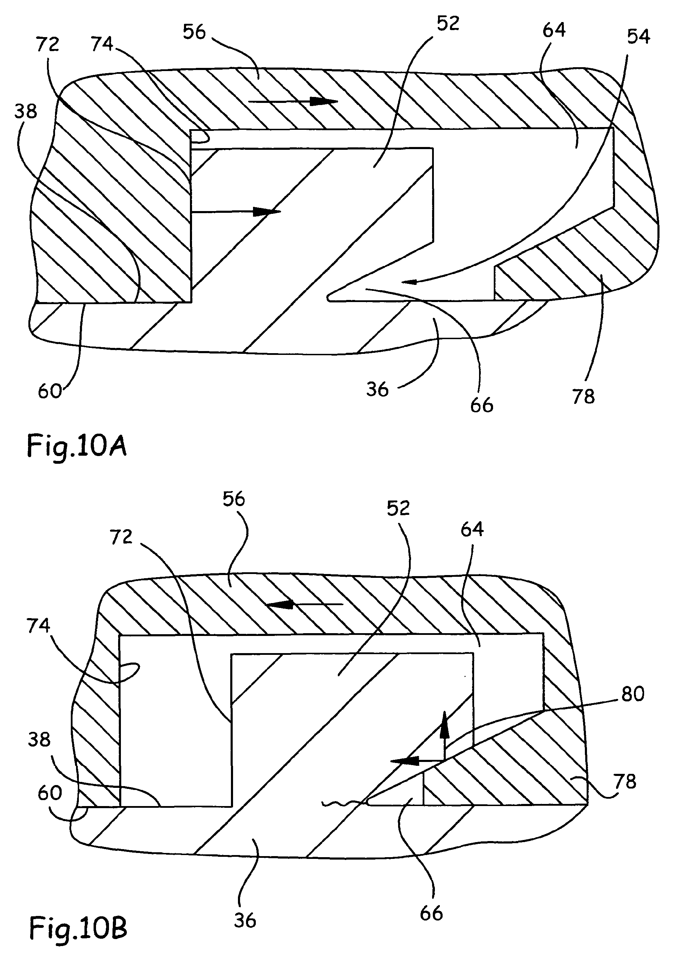

Selon une autre variante illustrée sur les figures 10A et 10B, l'outil 56 comprend au niveau de chaque encoche 64, une forme en coin 78 qui peut pénétrer dans l'entaille 66 de l'ergot 52 correspondant. Cet agencement permet comme illustré sur la figure 10B de créer un effort vertical 80 sur l'ergot qui tend à faciliter la rupture de l'ergot 52.

## Revendications

1. Fixation aveugle comprenant un corps (36) avec à une première extrémité une face apparente (38), traversé par un alésage (40) recevant une tige (42) dont une première extrémité (44) vient en saillie par rapport à la face apparente (38) et dont l'autre extrémité comprend une tête (46) apte à déformer une zone de déformation (48) lorsque la tige (42) se translate, la face apparente comprenant des moyens de maintien pour immobiliser en rotation la fixation aveugle par rapport à un outil utilisé pour entrainer en rotation la tige (42), lesdits moyens de maintien comprenant au moins un ergot (52) rapporté au niveau de la face apparente (38) et venant en saillie par rapport à cette dernière, **caractérisée en ce que** ledit au moins un ergot (52) est relié au corps (36) par une zone de jonction (54) apte à se rompre lorsque l'ergot (52) subit un effort supérieur à un seuil donné.

2. Fixation aveugle selon la revendication 1, **caractérisée en ce que** chaque ergot (52) comprend au niveau de la zone de jonction (54) au moins une entaille (66) qui permet d'obtenir une section réduite et de localiser la rupture de l'ergot (52).

3. Fixation aveugle selon la revendication 2, **caractérisée en ce que** pour chaque ergot (52), l'entaille (66) est réalisée à la base de l'ergot.

4. Fixation aveugle selon la revendication 3, **caractérisée en ce que** pour au moins un ergot, l'entaille (66) a une section triangulaire avec une face (70) disposée dans le plan de la face apparente (38) et une autre face (70') faisant un angle inférieur ou égal à 60°.

5. Fixation aveugle selon la revendication 3, **caractérisée en ce que** pour au moins un ergot, l'entaille (66) est délimitée par deux faces parallèles (68, 68'), l'une des deux faces (68) étant disposée dans le plan de la face apparente (38).

6. Fixation aveugle selon l'une quelconque des revendications 2 à 5, **caractérisée en ce que** pour chaque ergot, une entaille (66) est réalisée sur une face de l'ergot au niveau de laquelle prend appui un outil pour le sectionner.

7. Fixation aveugle selon l'une des revendications 2 à 6, **caractérisée en ce que** chaque ergot présente une première et seconde faces (72, 72') disposées dans deux plans sensiblement radiaux, l'une des deux faces présentant une entaille (66) à sa base.

8. Outil configuré pour mettre en place une fixation aveugle selon la revendication 7, ledit outil comprenant des moyens d'accouplement avec la tige (42) et une surface frontale (60), apte à prendre appui contre la face apparente (38) de la fixation aveugle, avec au moins une encoche (64) pour loger un ergot (52), **caractérisé en ce que** chaque encoche (64) comprend une première et seconde faces (74, 74') disposés sensiblement dans deux plans radiaux, une première face (74) étant susceptible de prendre appui contre la première face (72) de l'ergot pour immobiliser en rotation le corps (36) lors de la mise en rotation de la tige (42) pour provoquer la déformation de la fixation aveugle dans un premier sens de rotation de l'outil, une seconde face (74') étant susceptible de prendre appui contre la seconde face (72') de l'ergot pour provoquer la rupture de l'ergot dans un sens de rotation contraire de l'outil.

9. Outil selon la revendication 8, **caractérisé en ce qu'**il comprend au niveau de chaque encoche (64) une forme en coin (78) qui peut pénétrer dans une entaille (66) d'un ergot (52) correspondant.

10. Outil selon la revendication 8 ou 9, **caractérisé en ce que** chaque encoche comprend une face prenant appui à distance du fond d'une entaille (66) ménagée au niveau de l'ergot correspondant de manière à créer un moment qui facilite la rupture du ou des ergot(s).

## Patentansprüche

1. Blindbefestigung mit einem Körper (36), der an einem ersten Ende eine sichtbare Seite (38) aufweist, die von einer Durchführung (40) durchquert ist, die einen Schaft (42) aufnimmt, dessen erstes Ende (44) bezüglich der sichtbaren Seite (38) hervorsteht und dessen anderes Ende einen Kopf (46) aufweist, der dazu eingerichtet ist, eine Deformationszone (48) zu deformieren, wenn sich der Schaft (42) verschiebt, wobei die sichtbare Fläche Haltemittel aufweist, um die Blindbefestigung in Bezug auf die Drehung bezüglich eines Werkzeugs ruhigzustellen, das dazu verwendet wird, den Schaft (42) in Drehung zu versetzen, wobei die Haltemittel wenigstens einen Zapfen (52) aufweisen, der im Bereich der sichtbaren Fläche (38) angebracht ist und bezüglich letzterer hervorsteht, **dadurch gekennzeichnet, dass** der wenigstens eine Zapfen (52) mit dem Körper (36) durch einen Verbindungsbereich (54) verbunden ist, der dazu eingerichtet ist zu brechen, wenn der Zapfen (52) einer über einem Grenzwert liegenden Belastung ausgesetzt ist.

2. Blindbefestigung nach Anspruch 1, **dadurch gekennzeichnet, dass** der Zapfen (52) im Bereich des Verbindungsbereichs (54) wenigstens eine Einkerbung (66) aufweist, die es gestattet, einen verringerten Querschnitt zu erzielen und den Bruch des Zapfens (52) zu lokalisieren.

3. Blindbefestigung nach Anspruch 2, **dadurch gekennzeichnet, dass** bei jedem Zapfen (52) die Einkerbung (66) an der Basis des Zapfens ausgebildet ist.

4. Blindbefestigung nach Anspruch 3,**dadurch gekennzeichnet, dass** bei wenigstens einem Zapfen die Einkerbung (66) einen dreieckförmigen Querschnitt mit einer Seite (70) hat, die in der Ebene der sichtbaren Fläche (38) angeordnet ist, und einer anderen Seite (70'), die in einem Winkel kleiner oder gleich 60° angeordnet ist.

5. Blindbefestigung nach Anspruch 3, **dadurch gekennzeichnet, dass** bei wenigstens einem Zapfen die Einkerbung (66) von zwei parallelen Seiten (68, 68') begrenzt ist, wobei eine der beiden Seiten (68) in der Ebene der sichtbaren Seite (38) angeordnet ist.

6. Blindbefestigung nach einem der Ansprüche 2 bis 5, **dadurch gekennzeichnet, dass** bei jedem Zapfen die Einkerbung (66) auf einer Seite des Zapfens ausgebildet ist, in deren Bereich sich das Werkzeug abstützt, um diesen abzutrennen.

7. Blindbefestigung nach einem der Ansprüche 2 bis 6, **dadurch gekennzeichnet, dass** jeder Zapfen eine erste und zweite Seite (72, 72') aufweist, die in zwei im Wesentlichen radialen Ebenen angeordnet sind, wobei eine der beiden Seiten an ihrer Basis eine Einkerbung (66) aufweist.

8. Werkzeug, das dazu eingerichtet ist, eine Blindbefestigung nach Anspruch 7 zu setzen, wobei das Werkzeug Mittel zum Koppeln mit dem Schaft (42) und eine Stirnseite (60) aufweist, die dazu eingerichtet ist, sich auf die sichtbare Seite (38) der Blindbefestigung zu stützen, mit wenigstens einer Ausnehmung (64), um einen Zapfen (52) aufzunehmen, **dadurch gekennzeichnet, dass** jede Ausnehmung (64) eine erste und zweite Seite (74, 74') aufweist, die im Wesentlichen in zwei radialen Ebenen angeordnet sind, wobei eine erste Seite (74) dazu eingerichtet ist, sich auf die erste Seite (72) des Zapfens zu stützen, um den Körper (36) bei der Drehung des Schafts (42) bezüglich der Rotation ruhigzustellen, um die Deformation der Blindbefestigung bei einer ersten Drehrichtung des Werkzeugs zu bewirken, und wobei eine zweite Seite (74') dazu eingerichtet ist, sich gegen die zweite Seite (72') des Zapfens zu stützen, um den Bruch des Zapfens bei der entgegengesetzten Drehrichtung des Werkzeugs zu bewirken.

9. Werkzeug nach Anspruch 8, **dadurch gekennzeichnet, dass** dieses im Bereich jeder Ausnehmung (64) eine Keilform (78) aufweist, die in eine Einkerbung (66) eines entsprechenden Zapfens (52) eindringen kann.

10. Werkzeug nach Anspruch 8 oder 9, **dadurch gekennzeichnet, dass** jede Einkerbung eine Seite aufweist, die sich im Abstand zum Tiefpunkt einer Einkerbung (66) abstützt, die im Bereich des entsprechenden Zapfens ausgebildet ist, um ein Drehmoment zu schaffen, das den Bruch des oder der Zapfen(s) erleichtert.

## Claims

1. Blind attachment comprising a body (36) with - at a first end - a visible surface (38), through which a bore (40) passes that accommodates a rod (42) of which a first end (44) projects relative to the visible surface (38) and of which the other end comprises a head (46) that can deform a deformation zone (48) when the rod (42) moves translationally, with the visible surface comprising holding means for coupling the body (36) to a tool that is used for driving the rod (42) in rotation, said holding means comprising at least one lug (52) that is connected at the visible surface (38) and that projects relative to the latter, **characterized in that** said at least one lug (52) is connected to the body (36) by a junction zone (54) that can break when the lug (52) undergoes a force that exceeds a given threshold.

2. Blind attachment according to Claim 1, wherein each lug (52) comprises - at the junction zone (54) - at least one notch (66) that makes it possible to obtain a small cross-section and to track the rupture of the lug (52).

3. Blind attachment according to Claim 2, wherein for each lug (52), the notch (66) is made at the base of the lug.

4. Blind attachment according to Claim 3, wherein for at least one lug, the notch (66) has a triangular cross-section with a surface (70) that is arranged in the plane of the visible surface (38) and another surface (70') that makes an angle that is less than or equal to 60°.

5. Blind attachment according to Claim 3, wherein for at least one lug, the notch (66) is delimited by two parallel surfaces (68, 68'), with one of the two surfaces (68) being arranged in the plane of the visible surface (38).

6. Blind attachment according to any of Claims 2 to 5, wherein for each lug, a notch (66) is made on one surface of the lug at which a tool for cutting it into sections can rest.

7. Blind attachment according to any of Claims 2 to 6, wherein each lug comprises a first and a second faces (72, 72') arranged in two essentially radial planes, one of the two faces comprising a notch (66) at it base.

8. Tool for installing a blind attachment according to claim 7, said tool comprising means for coupling to the rod (42) and a frontal surface (60), able to rest against the visible surface (38) of the bling attachment, with at least one slot (64) for housing a lug (52), **characterized in that** each slot (64) comprises a first and a second faces (74, 74') arranged in two essentially radial planes, a first face (74) being able to rest against the first face (72) of the lug for immobilizing in rotation the body (36) during the rotation of the rod (42) for causing the deformation of the blind attachment in a first direction of rotation of the tool, a second face (74') being able to rest against the second face (72') of the lug to cause breakage of the lug in the opposite direction of rotation of the tool.

9. Tool according to Claim 8, wherein it comprises - at each slot (64) - a wedge shape (78) that can penetrate a notch (66) of a corresponding lug (52).

10. Tool according to Claim 8 or 9, wherein each slot comprises a surface that rests at a distance from the bottom of a notch (66) that is made at the level of the corresponding lug in such a way as to create a moment that facilitates the rupture of the lug(s).
